**Europäisches Patentamt**

(19) **European Patent Office**

**Office européen des brevets**

(11) Publication number : **0 297 889 B1**

(12) **EUROPEAN PATENT SPECIFICATION**

(45) Date of publication of patent specification :
04.03.92 Bulletin 92/10

(51) Int. Cl.⁵ : **B60C 9/20**

(21) Application number : **88305987.5**

(22) Date of filing : **30.06.88**

(54) **Pneumatic tyre.**

(30) Priority : **01.07.87 JP 166071/87**
**07.06.88 JP 140704/88**

(43) Date of publication of application :
**04.01.89 Bulletin 89/01**

(45) Publication of the grant of the patent :
**04.03.92 Bulletin 92/10**

(84) Designated Contracting States :
**DE FR GB**

(56) References cited :
**EP-A- 0 016 229**
**BE-A- 776 102**
**FR-A- 2 417 406**
**FR-A- 2 421 073**
**FR-A- 2 513 187**
**GB-A- 2 005 201**
**LU-A- 62 689**
**US-A- 4 185 675**

(73) Proprietor : **SUMITOMO RUBBER INDUSTRIES**
**LIMITED**
**No. 1-1, Tsutsui-cho 1-chome**
**Chuo-ku Kobe-shi Hyogo 651 (JP)**

(72) Inventor : **Takehara, Kenji**
**4-5-208 Honjyocho, 1-chome Higashi Nada-ku**
**Kobe-shi Hyogo-ken (JP)**
Inventor : **Takada, Yoshiyuki**
**Sumitomo Gomu Nishi-shataku 17 Azahounen**
**12**
**Shirakawa-shi Fukushima-ken (JP)**

(74) Representative : **Stewart, Charles Geoffrey**
**SP TYRES UK LIMITED Tyre Technical**
**Division**
**Fort Dunlop Birmingham B24 9QT (GB)**

EP 0 297 889 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a pneumatic tyre, which is improved in both steering stability and high speed durability, and also enhanced in wear resistance by making uniform the ground contact pressure distribution.

As the expressway network is expanded and the speed of automobiles, especially, passenger cars increases, radial tyres having radially arranged carcass cords and a belt composed of steel cords disposed outside thereof are widely employed as the tyres suited to high speed use. In such radial tyres, however, lifting may occur at both ends of the belt and cause separation from the surrounding rubber due to centrifugal force by rotation of tyres when travelling at high speed. Especially when a cut edge ply is used for the belt, rubber separation may be further promoted due to poor adhesion with the rubber at the cut ends of the cords.

In order to prevent separation from the rubber at the belt ply ends and improve high speed durability, various tyres have been proposed. For example, a tyre having a band B made of organic fibres disposed over each edge of the belt A in the shoulder regions as shown in Fig. 4, a tyre having two such edge bands B at each end of the belt as shown in Fig. 5, a tyre having a band C to cover the entire belt A in addition to the band B as shown in Fig. 6, a tyre having only the band C to cover the entire surface as shown in Fig. 7, and a tyre having two bands C,C to cover the entire surface as shown in Fig. 8.

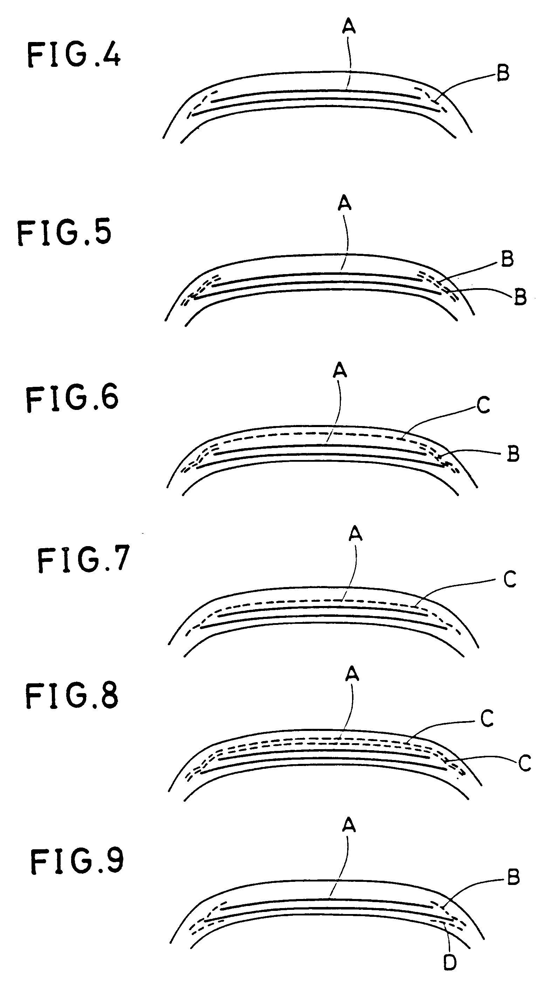

With regard to high speed durability, however, the tyre having two bands B as shown in Fig. 5 is superior to the one having only one band B as shown in Fig. 4. Furthermore when compared to the tyre having one band C as shown in Fig. 7, the tyre comprising the band B and the band C to cover the entire surface is found to be better in high speed durability. Nevertheless, as shown in Fig. 5, when two bands B are used, a difference in rigidity is likely to occur between the outer edges of the belt A, that is, the shoulder portions of the tyre and the crown portion, and the ground contact pressure distribution on the tread surface tends to be uneven. As a result, the steering stability at high speed becomes insufficient, and tread wear may well become uneven. Incidentally, when two bands C, are used to cover the entire surface of the belt A as shown in Fig. 8, if there is no difference in rigidity, the rigidity is lessened by the band C made of organic fibres instead of the belt A made of steel cords, and the stiffness of the tread surface is decreased, and this high speed steering stability itself may be lowered. A similar problem exists for the construction shown in Fig. 7.

A tyre comprising a pair of inner bands of organic cords disposed radially outside the carcass and the belt, the inner bands being laid substantially parallel to the tyre equator and having their axially outer edges substantially aligned with the edges of the widest belt ply, is disclosed in FR-A-2338813, which corresponds to the preamble of claim 1.

Furthermore, Japanese Laid-open Patent (KOKAI) No. 58-81008 proposes at each edge, as shown in Fig. 9, a band D disposed between the carcass and the belt A, in addition to a band B over the belt A. In this proposal, however, the upper and lower bands B and D are largely inclined reversely to each other with respect to the tyre equator at an angle of 8 - 15 degrees, and such largely inclined bands B, D tend to be excessively low in stiffness in the tyre equatorial direction, and an efficient function may not be produced by the bands.

An object of the present invention is therefore, to provide a pneumatic tyre which is improved in high speed durability whilst maintaining high speed steering stability and effectively prevents separation of the belt edge portions from the surrounding rubber. Another requirement of tyres is to reduce uneven wear and improve wear resistance apart from the steering stability and high speed durability stated above, and accordingly it is a second objective to keep uniform the ground contact pressure distribution on the tread surface.

Disposing a band in the shoulder portion as mentioned in the prior art above, however, increases the rigidity and the radially outward tread expansion or bulge-out becomes relatively smaller in the edge regions compared with the crown portion upon tyre inflation. As a result, the ground contact pressure in the crown portion where the bulge-out amount is relatively large becomes excessively large, which tends to cause an uneven ground contact pressure distribution.

Therefore, another object of the present invention is to provide a pneumatic tyre in which the distribution of the ground contact pressure is made uniform in the ground contact area and wear resistance is thus enhanced.

According to the present invention, a pneumatic tyre comprises a pair of bead cores (2), a carcass (3) turned up at both edges around said bead cores (2), a tread (T) disposed on the carcass (3), a breaker belt (4) comprising at least two plies (4A, 4B) of steel cords disposed radially outside the carcass (3), a pair of inner bands (5) disposed between the carcass (3) and the belt (4), each band (5) comprising stretchable cords of organic fibres the inner band cords being laid substantially parallel to the tyre equator, and the axially outer edge (d) of the inner bands (5) and the edges (a) of the widest ply of the belt (4) being substantially aligned, characterised in that the treat (T) has a tread surface comprising a inner arc part (T1) with a radius of curvature TR1 and two outer arc parts (T2) each with a radius of curvature TR2, the ratio TR2/TR1 of said radii is in the range of 0.15 to 0.45 when the tyre (1) is mounted on a standard rim and inflated to 5% of the standard pressure, and each border P, between said inner arc part (T1) and said outer arc parts (T2) is located in a region extending axially outwardly from the axially inner edge of each inner band (5) to the axially outer edge of the overlapping region where said at least two plies of said belt (4) are overlapped.

Thus, the rigidity in the shoulder portions is increased by the inner band of stretchable cords arranged nearly parallel to the tyre equator, which contributes to an enhancement of steering stability of the tyre. By disposing the inner band radially inside the belt, the stress concentration in the belt edge parts caused by rotation of the tyres may be alleviated, so that separation from the rubber in the edge parts may be prevented. Besides, since the outer edges of the inner bands approximately coincides with the edges of the belt, the stress concentration at the edges may be lessened, and separation may be prevented, which enhances the high speed durability of the tyre.

An embodiment of the present invention will now be described, by way of example, with reference to the drawings, in which:

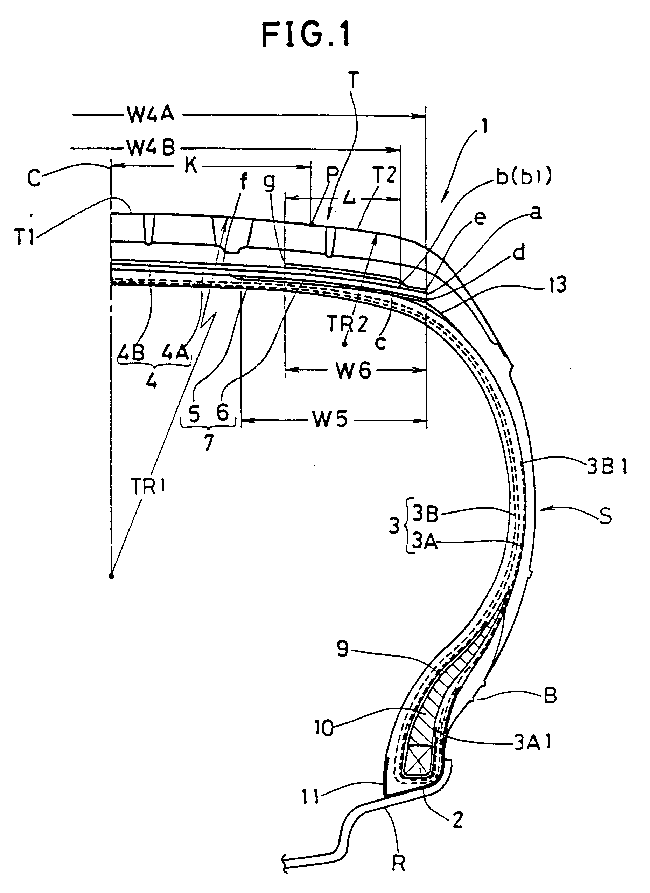

Fig. 1 is a sectional view showing an embodiment of the present invention;

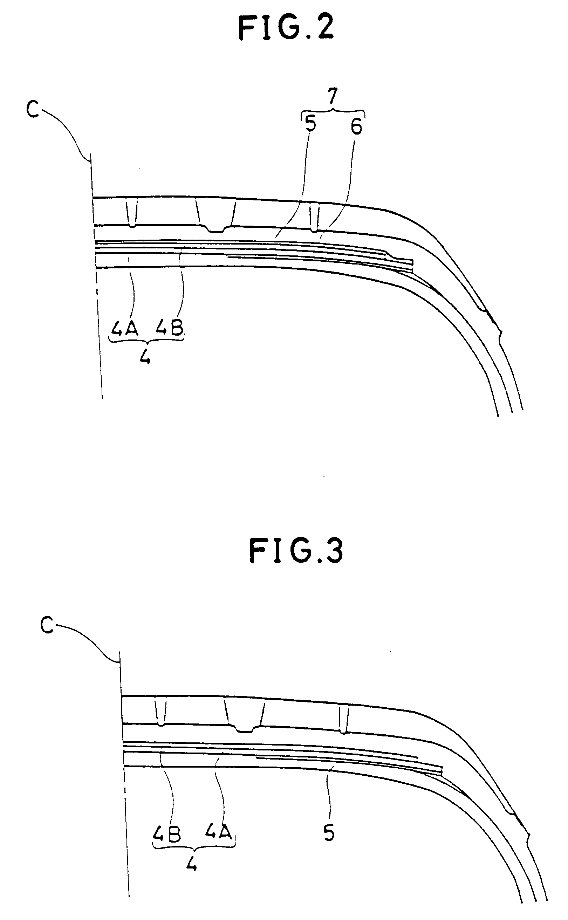

Fig. 2 and 3 are sectional views each showing another embodiment;

Fig. 4 to 9 are diagrams each showing conventional structures; and

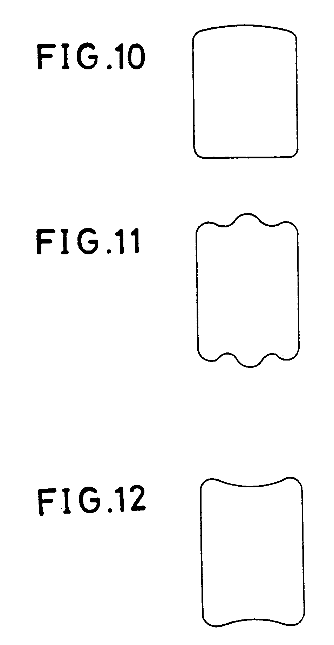

Figs. 10 to 12 are diagrams showing the shape of the ground contact surface.

In Fig. 1, a pneumatic tyre 1 has a tread T, a pair of beads B, and a pair of sidewalls S therebetween, and also comprises a carcass 3 which at each edge is turned around from the inside to the outside of the tyre a bead core 2 of the bead B to which is secured. A belt is provided, 4, which is disposed radially outside the carcass 3, and a band 7 which comprises on inner band 5 disposed between the carcass 3 and the belt 4, and an outer band 6 disposed radially outside the belt 4.

Each bead is provided with a bead apex 10, made of a rubber material, which is tapered radially outwardly, from the bead core 2 to improve transverse rigidity, and also is provided with a chafer 11 prevent chafe by the rim.

The carcass 3 is composed of an inner ply 3A which surrounds the bead core 2 over a reinforcing layer 9, and an outer ply 3B disposed around the bead along the outer side of the inner ply 3A. The turn-up end 3A1 of the inner ply 3A ends above the bead core 2, while the turn-up end 3B1 of the outer ply 3B ends near the position of the maximum width of the tyre. Incidentally, the reinforcing layer 9 not only prevents abrasion of the bead core 2 and the inner ply 3A under ply movement during deflection by ground contact of the tyre, but also enhances the rigidity of the bead.

Meanwhile, the carcass 3 has a radial structure in which its carcass cords are arranged at 60 to 90 degrees with respect to the tyre equator C. As carcass cords, organic fibre cords of nylon, rayon, polyester or the like may be used as well as steel cords.

The above-mentioned belt 4 is, in this embodiment, composed of inner and outer belt plies 4A and 4B. The width W4A of the inner belt ply 4A is set between 1.01 and 1.20 times the width W4B of the outer belt ply 4B, thus preventing concentration of rigidity in the surrounding rubber which would be caused by matching the axially outer edges (a, b) of the belt plies 4A, 4B. And, in this embodiment, the overlapping region of the belt plies 4A, 4B is formed in the crown portion from the above mentioned edge (b) and this edge (b) becomes the starting point (b1) of the shoulder region of the overlapped region.

The cords of the belt plies 4A, 4B are steel cords, and the steel cords are arranged to incline about 10 to 30 degrees to the tyre equator and are opposite to each other for the inner and outer belt plies 4A, 4B, so that the uniformity of the tyre us enhanced.

Incidentally, the outer belt ply 4B may be designed wider than the inner belt ply 4A.

Furthermore, the inner belt ply 4A contacts the carcass 3 between the points (c) across the tyre, and is spaced from the carcass 3 outside the point (c). In the spaced apart region there is a breaker cushion 13 made of a triangular section of soft rubber which is located at the edge of the belt 4 and extends into the shoulder region along the carcass 3 from the spaced apart region.

The above mentioned inner band is positioned with its axially outer edge (d) thereof nearly matched with the edge (a) of the wider belt ply which is the inner belt ply 4A in this embodiment. By "nearly matched" is meant that the outer edge (d) of the inner band (5) correctly coincides with the edge (a) of the belt ply 4A without being located axially inward thereof, or it is projected outwardly by a distance not exceeding 8mm or more preferably 5mm, from the edge (a) yet, the inner band 5 contacts the radially inner side of the inner belt ply 4A, and the edge region of the inner band 5 is held between the belt ply 4A and the breaker cushion 13.

The width W5 of the inner band 5 is set in the range of 15 to 40% of the maximum width W4 of the belt 4, that is, the width W4A of the inner belt ply 4A in this embodiment.

The above mentioned outer band 6 on the other hand, has its outer edge (e) in the widthwise direction of the tyre nearly matched with the outer edge (d) of the inner band 5 and so this outer band 6 covers the outer

EP 0 297 889 B1

edge region of the outer belt ply 4B, and its width W6 is set within a range of 15 to 40% of the width W4A of the belt ply 4A, and equal to or smaller than the width W5 of the inner band 5.

The inner band 5 and outer band 6 are both made of cords of organic fibres and the materials of such organic fibres may be nylon, polyester, rayon or other similar relatively stretchable fibres. Thus the cords may expand or contract to follow up expansion or contraction of the belt 4 when the tyre is deflected, so that separation from the belt 4 may be prevented.

The band cords are arranged so as to be substantially parallel to the tyre equator C individually, that is, in the range of 0 to 4 degrees, or more preferably 0 to 2 degrees, with respect to the tyre equator C.

Alternatively, as shown in Fig.2, the outer band 6 may also be formed in such a manner as to cover the entire region of the belt, or the outer band 6 may be omitted as shown in Fig.8.

In each case, however, the pneumatic tyre 1 of the invention has the inner band 5, with cords L inclined at a small angle to the tyre equator C and made of stretchable cords of organic fibres, disposed between the carcass 3 and the belt 4.

Therefore, the tension acting on the carcass 8 may be smoothly transmitted to the belt 4 through the inner band 5, and the rigidity at the shoulder portion is increased by the increased tension in the belt 4, thereby contributing to enhancement of the steering stability of the tyre.

Furthermore, by disposing the inner band 5 radially inside the belt 4, stress concentration at the edge region of the belt 4 due to rotation of the tyre may be alleviated, and separation from the rubber in the edge region may be prevented.

Besides, since the outer edge (d) of the inner band 5 nearly coincides with the outer edge (a) of the inner belt ply 4A, the stress concentration at the outer edge (d) is reduced, and separation is prevented, so that the high speed durability of tyre us enhanced.

There again, by placing the edge region of the inner band 5 somewhere between the belt 4 and the breaker cushion 13, the buffer effect of the inner band 5 may be enhanced yet further by co-ordinating with the breaker cushion 13, so that prevention of separation may be further increased.

What is more, as shown in Fig.1, the outer band 6 covering the edge of the belt 4 decreases, together with the inner band 5, the difference in rigidity between the edge region and crown region of the belt 4 when plural bands B, as shown in Fig 5, are used and this acts to make more uniform the distribution of ground contact pressure, thereby enhancing the steering stability at high speed and making tread wear even.

Moreover, as shown in Fig.2, when the outer band 6 covers the entire width of the belt 4, separation from the rubber in the edge regions of the belt 4 may be prevented by co-ordinating with the inner band 5, and in distinction from the case of two bands C, C disposed as shown in Fig.8, the rigidity of the belt 4 is transmitted to the tread to prevent reduction of stiffness of the tread, so that steering stability at high speed is maintained.

In addition, the inner band 5 is in the range of 15 to 40% of the width W4A of the belt ply 4A having the maximum width. When the outer band 6 is provided, its width W6 is also set in the same range, and it is preferable to arrange it is that it has a smaller width W6 than the width W5 of the inner band 5.

In this case, if the width W5 of the inner band is smaller than said 15%, the preventative effect of separation from the rubber in the edge region of the belt 4 is inferior. Also it is not necessary to exceed 40% from the viewpoint of preventing separation.

Incidentally, the provision of the range in which the carcass 3 and the belt 4 directly contact one other helps to transmit the tension of the carcass 3 to the belt 4.

Similarly, if the width W6 of the outer band 6 is less than said 15% the prevention of separation from the rubber is inferior as in the case of the inner band 5. It is not necessary to exceed 40% likewise. Besides, to set the width W6 of the outer band 6 smaller than the width W5 of the inner band 5 is intended to prevent a difference in the rigidity of the inner edge (f,g) in the widthwise direction of the tyre coincide with each other. Also from the viewpoint of prevention of separation of rubber, it has been found that the effect is seen if the outer band 6 is smaller in width. Alternatively, the outer band 6 can be increased in width as shown in Fig.2.

The tyre 1 is installed on a specified rim R which is determined for each tyre. When inflated to 5% of the standard pressure determined for each tyre, the tread surface is formed by an inner arc part T1 forming its crown portion, and by outer arc parts T2 forming its shoulder portions. The inner arc part T1 is composed of an arc plane with the radius of curvature TR1 having a centre point on the tyre equator C, while the outer arc part T2 is composed of an arc plane with radius of curvature TR2.

In the tyre 1, when inflated to the 5% pressure, the ratio TR2/TR1 of the radius of curvature TR2 to the radius of curvature TR1 is set in the range of 0.15 to0 45, or more preferably 0.20 to 0.35.

More specifically, by disposing the inner band 6 in the edge region of then belt 4, the rigidity of the shoulder portion is increased, so that the bulge out amount, when inflated, of the shoulder portion, that is, the outer arc part T2 is restricted. Therefore, the bulge-out amount of the crown, that is the inner arc part T1 is increased relatively and the radius of curvature TR1 of that portion is reduced, so that the distribution of ground contact pressure on the tread surface may be uneven. Accordingly, by setting the ratio of radii of curvature TR2/TR1 within the above mentioned range and the radius of curvature TR1 of the inner arc part T1 when inflated to the 5% pressure larger than the radius of curvature of the outer arc part T2 primarily within the same range, the tread surface shape when the tyre is inflated is set correctly, and the distribution of the ground contact pressure is made uniform. It effectively functions in the so-called low aspect ratio tyre.

The distance K, from the tyre equator C to the border point P defined as the contact point or intersecting point of the inner arc part T1 and the outer arc part T2, is set so that this border point is located in a range L between the inner edge (f) of the crown side of the inner band 6 and the starting point (b1) of the shoulder side of the overlapped region of the belt plies 4A, 4B, in the widthwise direction of the tyre. In this case, the starting point b1 refers to the position where overlapping of at least two plies begins even when the belt 4 is composed of three or more plies.

As a result, the point P, which is the deflection point, is positioned in the range L of a relatively high rigidity, and even when the tyre is inflated, excessive change in the curvature at the point is restricted, and the tread surface shape is made smooth, which contributes to uniform distribution of ground contact pressure.

The tyres having the structure shown in Figs. 1 and 2, size 195.60R14 and specifications as shown in Table 1 were fabricated as embodiments 1 to 6 of the present invention, and reference tyres 1 to 10 shown in Table 2 were also fabricated. High speed durability, high speed steering performance, and wear were compared. Also, the shape of the ground contact surface was measured. Each tyre was provided with a belt comprising two plies of steel cords having an inclination angle of 19 degrees.

The durability of these tyres was tested by step speed test conforming to ECE30, the results being shown in Tables 1 & 2. The performance was better in the tyres 1 to 6 as of the present invention as compared with the reference tyres 8 to 10 having no inner band. The reference tyre 7 using aromatic polyamide in the band failed at a low speed.

The tyres were then mounted on a 1500 cc front wheel drive passenger car, and the steering performance was measured by a feel test, and the results were evaluated in three ranks. In this test, the car travelled on a flat road surface in a curved path at a speed of 80 km/h.

Table 1

| Tire | Ex.1 | Ex.2 | Ex.3 | Ex.4 | Ex.5 | Ex.6 |
|---|---|---|---|---|---|---|
| Structure | Fig.1 | Fig.1 | Fig.1 | Fig.3 | Fig.3 | Fig.3 |
| Inner band cord: material | 6.6 Nylon | 6.6 Nylon | Polyester | 6.6 Nylon | 6.6 Nylon | Polyester |
| denier | 840 d/2 | 1260 d/2 | 1000 d/2 | 840 d/2 | 1260 d/2 | 1000 d/2 |
| inclination angle | 0 deg | 0 deg | 0 deg | 0 deg | 0 deg | 0 deg |
| Outer band cord: material | 6.6 Nylon | 6.6 Nylon | Polyester | | | |
| denier | 840 d/2 | 1260 d/2 | 1000 d/2 | | | |
| inclination angle | 0 deg | 0 deg | 0 deg | | | |
| TR1 | 860 mm | 860 mm | 860 mm | 820 mm | 820 mm | 820 mm |
| TR2 | 185 mm | 185 mm | 185 mm | 230 mm | 230 mm | 230 mm |
| TR2/TR1 | 0.215 | 0.215 | 0.215 | 0.280 | 0.280 | 0.280 |
| Distance X | 45 mm | 45 mm | 45 mm | 32 mm | 32 mm | 32 mm |
| ECE30 high speed durability test | 230 km/h | 250 km/h | 250 km/h | 220 km/h | 240 km/h | 230 km/h |
| High speed steering stability | 4 | 4 | 4 | 4.5 | 4.5 | 4.5 |
| Wear uniformity | 10 | 9 | 9 | 10 | 9 | 9 |

EP 0 297 889 B1

Table 2

| Tire | Ref.1 | Ref.2 | Ref.3 | Ref.4 | Ref.5 | Ref.6 | Ref.7 | Ref.8 | Ref.9 | Ref.10 |
|---|---|---|---|---|---|---|---|---|---|---|
| Structure | Fig.1 | Fig.1 | Fig.1 | Fig.3 | Fig.3 | Fig.3 | Fig.1 | Fig.4 | Fig.5 | Fig.8 |
| **Inner band cord:** | | | | | | | | | | |
| material | 6.6 Nylon | 6.6 Nylon | Polyester | 6.6 Nylon | 6.6 Nylon | Polyester | Aramide | | | |
| denier | 840 d/2 | 1260 d/2 | 1000 d/2 | 840 d/2 | 1260 d/2 | 1000 d/2 | 1500 d/2 | | | |
| inclination angle | 0 deg | 0 deg | 0 deg | 0 deg | 0 deg | 0 deg | 0 deg | | | |
| **Outer band cord:** | | | | | | | | | | |
| material | 6.6 Nylon | 6.6 Nylon | Polyester | | | | Aramide | 6.6 Nylon | 6.6 Nylon | 6.6 Nylon |
| denier | 840 d/2 | 1260 d/2 | 1000 d/2 | | | | 1500 d/2 | 840 d/2 | 840 d/2 | 840 d/2 |
| inclination angle | 0 deg | 0 deg | 0 deg | | | | 0 deg | 0 deg | 0 deg | 0 deg |
| TR1 | 450 mm | 450 mm | 450 mm | 450 mm | 450 mm | 450 mm | 450 mm | 450 mm | 450 mm | 450 mm |
| TR2 | 450 mm | 450 mm | 450 mm | 450 mm | 450 mm | 450 mm | 450 mm | 450 mm | 450 mm | 450 mm |
| TR2/TR1 | 1.0 | 1.0 | 1.0 | 1.0 | 1.0 | 1.0 | 1.0 | 1.0 | 1.0 | 1.0 |
| **Distance K** | | | | | | | | | | |
| ECE30 high speed durability test | 230 km/h | 250 km/h | 250 km/h | 220 km/h | 240 km/h | 230 km/h | 210* km/h | 220 km/h | 240 km/h | 230 km/h |
| High speed steering stability | 3.5 | 3.5 | 3.5 | 4 | 4 | 4 | 2.5 | 3.5 | 3 | 3 |
| Wear uniformity | 7 | 6 | 6 | 8 | 7 | 7 | 5 | 7 | 6 | 8 |

Note: clown portion was broken by excessive rigidity

The state of wear was tested by running tyres on actual cars. The state of wear was to show the uniformity of wear, and after travelling at rated load for 3,000 km, all tyres were evaluated in ten ranks. In these tests, the larger point means the better state of wear.

The tyres of the present invention were as compared with the reference tyres, worn uniformly. The shape of the ground contact surface is schematically shown in Fig.10 (embodiment tyre 3), Fig.11 (reference tyre 7), and Fig.12 (reference tyre 8), the embodiment tyre was found to have a smooth ground contact surface shape, which is considered to be due to the uniform distribution of ground contact pressure.

Thus, the pneumatic tyre of this invention has at least a pair of inner bands of stretchable cords made of organic fibres disposed between the carcass and the belt, with the band cords being substantially parallel to the tyre equator. This construction effectively prevents separation from the rubber in the belt edge regions while maintaining high speed steering stability, and also enhancing durability at high speed.

In addition, since the ratio of radii of curvature of the inner arc part and outer arc part of the tread surface and the boundary point are kept within a specified range, the distribution of ground contact pressure is made uniform, and uneven wear is prevented.

## Claims

1. A pneumatic tyre comprising a pair of bead cores (2), a carcass (3) turned up at both edges around said bead cores (2), a tread (T) disposed on the carcass (3), a breaker belt (4) comprising at least two plies (4A, 4B) of steel cords disposed radially outside the carcass (3), a pair of inner bands (5) disposed between the carcass (3) and the belt (4), each band (5) comprising stretchable cords of organic fibres the inner band cords being laid substantially parallel to the tyre equator, and the axially outer edge (d) of the inner bands (5) and the edges (a) of the widest ply of the belt (4) being substantially aligned, characterised in that the tread (T) has a tread surface comprising a inner arc part (T1) with a radius of curvature TR1 and two outer arc parts (T2) each with a radius of curvature TR2, the ratio TR2/TR1 of said radii is in the range of 0.15 to 0.45 when the tyre (1) is mounted on a standard rim and inflated to 5% of the standard pressure, and each border P, between said inner arc part (T1) and said outer arc parts (T2) is located in a region extending axially outwardly from the axially inner edge of each inner band (5) to the axially outer edge of the overlapping region where said at least two plies of said belt (4) are overlapped.

2. A tyre according to claims 1 characterised in that the belt (4) comprises two plies (4A, 4B) of steel cords and the radially inner ply (4A) is wider than the outer ply (4B).

3. A tyre according to claims 1 or 2 characterised in that the width W5 of each inner band (5) is in the range of 15 to 40% of the width W4 of the widest ply of said belt (4).

4. A tyre according to claims 1, 2 or 3 characterised in that the tread portion, of the tyre includes at each edge a cushion (13) of soft rubber disposed between the axially outer edge regions of the inner bead (5) and the carcass (13).

5. A tyre according to claims 1, 2, 3 or 4 characterised by a pair of outer bands (6) made of stretchable organic fibre cords both disposed radially outside the belt (4), the width W6 of each outer band (6) being in the range of 15 to to 40% of the width W4 of the widest ply of the belt (4), and the width W6 is smaller than the width W5 of the inner band (5).

6. A tyre according to claims 1, 2, 3, or 4 characterised by an outer band (6) made of stretchable organic fibre cords disposed radially outside said belt (4), and having has a width substantially the same as the width W4 of the widest ply of said belt (4).

7. A tyre according to any one of claims 1 to 6 characterised in that the organic fibre cord is a heat shrinkable cord.

## Patentansprüche

1. Luftreifen, der umfaßt ein Paar Wulstkerne (2), eine an beiden Kanten um die Wulstkerne (2) nach oben zurückgeschlagene Karkasse (3), einen an der Karkasse (3) angeordneten Laufstreifen (T), ein mindestens zwei Lagen (4A, 4B) aus Stahlkorden umfassender, radial außerhalb der Karkasse (3) angeordneter Gürtel (4), ein Paar innere Bänder (5), die zwischen der Karkasse (3) und dem Gürtel (4) angeordnet sind, wobei jedes Band (5) dehnbare Korde aus organischen Fasern umfaßt, die inneren Bandkorde im wesentlichen parallel zum Reifenäquator gelegt sind und die axial äußere Kante (d) der inneren Bänder (5) und die Kanten (a) der breitesten Lage des Gürtels (4) im wesentlichen ausgerichtet sind, dadurch gekennzeichnet, daß der Laufstreifen (T) eine Laufstreifenfläche besitzt, die einen inneren Bogenteil (T1) mit einem Krümmungsradius TR1 und zwei äußere Bogenteile (T2) jeweils mit einem Krümmungsradius TR2 umfaßt, das Verhältnis TR2/TR1 der Radien im Bereich von 0,15 bis 0,45 liegt, wenn der Reifen (1) an einer Standardfelge angebracht und auf 5% des Standarddrucks aufgepumpt ist, und jede Grenze P zwischen dem inneren Bogenteil (T1) und den äußeren Bogenteilen (T2) in einem Bereich angeordnet ist, der sich axial von der axial inneren Kante jedes inneren Bandes (5) zu der axial äußeren Kante des Überdeckungsbereichs erstreckt, wo die mindestens zwei Lagen des Gürtels (4) überdeckt sind.

2. Reifen nach Anspruch 1, dadurch gekennzeichnet, daß der Gürtel (4) zwei Lagen (4A, 4B) von Stahlkorden umfaßt und die radial innere Lage (4A) breiter als die äußere Lage (4B) ist.

3. Reifen nach Anspruch 1 oder 2, dadurch gekennzeichnet, daß die Breite W5 jedes inneren Bandes (5) im Bereich von 15 bis 40% der Breite W4 der breitesten Lage des Gürtels (4) liegt.

4. Reifen nach Anspruch 1, 2 oder 3, dadurch gekennzeichnet, daß der Laufstreifenabschnitt des Reifens an jeder Kante ein Kissen (13) aus Weichgummi enthält, das zwischen den axial äußeren Kantenbereichen des inneren Bandes (5) und der Karkasse (13) angeordnet ist.

5. Reifen nach Anspruch 1, 2, 3 oder 4, gekennzeichnet durch ein Paar äußerer Bänder (6) aus dehnbaren organischen Faserkorden, die beide radial außerhalb des Gürtels (4) angeordnet sind, wobei die Breite W6 jedes äußeren Bandes (6) im Bereich von 15 bis 40% der Breite W4 der breitesten Lage des Gürtels (4) liegt, und die Breite W6 geringer als die Breite W5 des inneren Bandes (5) ist.

6. Reifen nach Anspruch 1, 2, 3 oder 4, gekennzeichnet durch ein äußeres Band (6) aus dehnbaren organischen Faserkorden, das radial außerhalb des Gürtels (4) angeordnet ist und eine im wesentlichen gleiche Breite wie die Breite W4 der breitesten Lage des Gürtels (4) besitzt.

7. Reifen nach einem der Ansprüche 1 bis 6, dadurch gekennzeichnet, daß der Kord aus organischen Fasern ein wärmeschrumpfbarer Kord ist.

**Revendications**

1. Pneumatique comprenant deux tringles (2), une carcasse (3) repliée à ses deux bords autour des tringles (2), une bande de roulement (T) disposée sur la carcasse (3), une ceinture (4) de nappe sommet comprenant au moins deux nappes (4A, 4B) de câblés d'acier disposés radialement à l'extérieur de la carcasse (3), deux bandes internes (5) disposées entre la carcasse (3) et la ceinture (4), chaque bande (5) comprenant des câblés extensibles formés de fibres organiques, les câblés de la bande interne étant disposés en direction sensiblement parallèle à l'équateur du pneumatique, le bord axialement externe (d) des bandes internes (5) et les bords (a) de la nappe la plus large de la ceinture (4) étant sensiblement alignés, caractérisé en ce que la bande de roulement (T) a une surface de bande de roulement comprenant une partie d'arc interne (T1) ayant un rayon de courbure TR1 et deux parties d'arc externes (T2) ayant chacune un rayon de courbure TR2, le rapport TR2/TR1 des rayons étant compris entre 0,15 et 0,45 lorsque le pneumatique (1) est monté sur une jante normale et est gonflé à 5 % de la pression normale, et chaque bordure P, entre la partie d'arc interne (T1) et les parties d'arc externes (T2), se trouve dans une région disposée axialement à l'extérieur du bord axialement interne de chaque bande interne (5) vers le bord axialement externe de la région de recouvrement dans laquelle les deux nappes au moins de la ceinture (4) se recouvrent.

2. Pneumatique selon la revendication 1, caractérisé en ce que la ceinture (4) comporte deux nappes (4A, 4B) de câblés d'acier, et la nappe radialement interne (4A) est plus large que la nappe externe (4B).

3. Pneumatique selon la revendication 1 ou 2, caractérisé en ce que la largeur W5 de chaque bande interne (5) est comprise entre 15 et 40 % de la largeur W4 de la nappe la plus large de la ceinture (4).

4. Pneumatique selon la revendication 1, 2 ou 3, caractérisé en ce que la partie de bande de roulement du pneumatique comprend, à chaque bord, un coussin (13) de caoutchouc mou disposé entre les régions des bords axialement externes du talon interne (5) et de la carcasse (13).

5. Pneumatique selon la revendication 1, 2, 3 ou 4, caractérisé par une paire de bandes externes (6) formées de câblés de fibres organiques extensibles, disposées toutes deux radialement à l'extérieur de la ceinture (4), la largeur W6 de chaque bande externe (6) étant comprise entre 15 et 40 % de la largeur W4 de la nappe la plus large de la ceinture (4), et la largeur W6 est inférieure à la largeur W5 de la bande interne (5).

6. Pneumatique selon la revendication 1, 2, 3 ou 4, caractérisé par une bande externe (6) formée de câblés de fibres organiques extensibles, disposée radialement à l'extérieur de la ceinture (4) et ayant une largeur sensiblement égale à la largeur W4 de la nappe la plus large de la ceinture (4).

7. Pneumatique selon l'une quelconque des revendications 1 à 6, caractérisé en ce que le câblé de fibres organiques est un câblé thermorétractable.

EP 0 297 889 B1

# FIG.1

10

# FIG.2

# FIG.3

FIG.4

FIG.5

FIG.6

FIG.7

FIG.8

FIG.9

FIG.10

FIG.11

FIG.12